# EUROPEAN PATENT SPECIFICATION

(11) **EP 3 128 065 B1**
(45) Date of publication and mention of the grant of the patent: **20.03.2019**
(21) Application number: 14887626.1
(22) Date of filing: 12.06.2014
(51) Int. Cl.: D06F 39/10

(54) **WASHING MACHINE FLOCCULATION APPARATUS WITH SELF-CLEANING FUNCTION, AND WASHING MACHINE**
WASCHMASCHINENFLOCKUNGSVORRICHTUNG MIT SELBSTREINIGUNGSFUNKTION UND WASCHMASCHINE
APPAREIL DE FLOCULATION DE MACHINE À LAVER À FONCTION AUTO-NETTOYANTE, ET MACHINE À LAVER

(30) Priority: 27.03.2014 CN 201410118981; 27.03.2014 CN 201410119225
(43) Date of publication of application: 08.02.2017
(73) Proprietor: Haier Group Corporation, Qingdao, Shandong 266101 (CN); Qingdao Haier Washing Machine Co., Ltd., Qingdao, Shandong 266101 (CN)
(72) Inventor: XU, Sheng, Qingdao Shandong 266101 (CN); LI, Haitao, Qingdao Shandong 266101 (CN); DENG, Jinzhu, Qingdao Shandong 266101 (CN); LV, Yanfen, Qingdao Shandong 266101 (CN)
(74) Representative: Pfenning, Meinig & Partner mbB
(86) International application number: PCT/CN2014/079776
(87) International publication number: WO 2015/143785

(56) References cited:
- EP-A1- 1 639 189
- WO-A1-2012/084619
- CN-A- 1 465 803
- CN-A- 101 545 192
- CN-Y- 201 258 412
- KR-U- 20090 002 072
- US-B1- 6 402 962

## Description

### TECHNICAL FIELD

The present invention relates to a treatment apparatus for recycling water of a washing machine, particularly to a treatment apparatus for recycling water of a washing machine adopting a flocculation way, in particular to a flocculation apparatus of a washing machine with a self-cleaning function and the washing machine.

### BACKGROUND

With the improvement of people's living standard, washing machines have already become one of main household appliances in people's daily life; a washing process of the washing machine mainly includes a washing phase, a rinsing phase and a spin-dry phase; in the washing phase, water entering into the washing machines and detergents are used to wash clothes; in the rinsing phase, in order to rinse out stains and remaining detergents, more water is required or multiple times for rinsing are performed to rinse out the clothes, thereby consuming a great amount of water resources; and even for a water-saving drum washing machine, the clothes are needed to be rinsed for at least twice for the purpose of rinsing out the clothes, at least 30L of tap water is consumed in this process. When there are fewer stains on the clothes or fewer detergents are used, the clothes can be cleaned by means of twice rinsing, but if a user selects a three-time rinsing mode, the water resources are certainly wasted; for example, the basic water consumption for twice rinsing of a 6kg full-automatic washing machine is generally about 100L. How to save water and electric power during cleaning the clothes simultaneously is always one of the focuses concerned by consumers.

So far, there is no water purifying and circulating device used with a household washing machine. Even for a so-called washing machine with water-saving function, a water storage tank is generally installed at a side position of the washing machine, a water pump is used to inject and discharge the water, and three times of rinsing can be performed, with the water injected at one time, thereby realizing the water-saving function. However, the post-washing water cannot be stored, meanwhile, the washing machine is complex in structure, large in size and inconvenient for transportation and recycle. Due to limitations on the aspects such as the volume, the structure, the flexibility and the like, original functions of the washing machine are affected and the function of a water-saving tank itself cannot be sufficiently played. In order to better save the water resources, on the basis of an existing washing way, many manufacturers have done a great number of researches and developments.

The existing washing machine has a water circulating function, which only plays a role in filtering line lint, homogenizing the washing or sterilizing by adding ozone or heavy metal ions. The water consumption cannot be improved, and the cleanliness of the clothes is not fundamentally improved.

For the circulating of the wash water, by referring to relevant patent documents, such as, a patent with an application No.200810072420.5 entitled "washing machine water circulating and saving device", the wash water is input into a water drum to be purified. This invention directly discharges the first-time wash water without purifying the first-time wash water, and the second-time and the third-time rinsing water is purified to be used for the next washing.

In the above art, "the water circulating technology" is to utilize the rinsing water after being purified and cannot circularly utilize the first-time wash water (primary wash water) ; and the purified water is remained for use in the next washing and cannot be currently used for washing the clothes.

A Chinese patent with an application No.03256181.4 discloses a water-saving washing machine, wherein a primary filter apparatus is arranged in front of a water outlet of a washing drum; and the water-saving washing machine is also provided with a water storage drum, a flocculation pool is arranged on the bottom of the water storage drum, a filter apparatus is arranged above the flocculation pool, the flocculation pool is communicated with the washing drum through a pipeline, the flocculation pool is also provided with a sewage drain outlet, and the pipeline is provided with a pump.

The flocculation pool of the above structure has no washing function, so after being used for a long time, the side wall of the flocculation pool will be attached with stains in a flocculation shape, thereby breeding bacteria.

Document CN101545192 A discloses a solvent purification apparatus capable of excellently removing pollutant at rotation central portion of the rotary disk type filter during rotary disk type regenerator, and a solvent filtering apparatus. In a first filter apparatus, the rotary disk type filter intermittently rotates under the state that solvent is stored in a container within a predetermined amount. The situation that the solvent in the container is separated from the rotation central portion of the rotary disk type filter and space is formed in the portion. Consequently, when the rotary disk is regenerated, because the rotation central portion of the rotary disk type filter can be made hit the liquid level of the solvent in the container, pollutant at the rotary central portion of the rotary disk type filter can be excellently removed.

### SUMMARY

The present invention aims at solving the technical problem of overcoming the weaknesses of the existing art and providing a flocculation apparatus of a washing machine with a simple structure and a self-cleaning function according to independent claim 1. Further improvements and embodiments are provided in the dependent claims.

Another object of the present invention is to provide a washing machine with the flocculation apparatus.

In order to solve the above technical problems, a basic concept of a technical solution adopted by the present invention is as follows: a flocculation apparatus of a washing machine with a self-cleaning function includes a flocculation container and a stirring mechanism, and further includes a washing mechanism for scouring an inner wall of the flocculation container, wherein the washing mechanism includes a water throwing impeller and a drive motor for driving the water throwing impeller to rotate, and the inlet water is thrown by the water throwing impeller to the inner wall of the flocculation container to perform washing.

Further, the stirring mechanism includes a stirring motor installed outside the flocculation container, a stirring shaft extending into the flocculation container and a stirring impeller installed on the stirring shaft.

Further, the drive motor is the stirring motor, and the water throwing impeller is coaxially installed on the stirring shaft and is positioned between the stirring motor and a stirring impeller. The stirring impeller is installed at the bottom end of the stirring shaft; the water throwing impeller is installed on a position of the stirring shaft adjacent to the stirring motor; when water enters for washing the flocculation container, the stirring motor drives the water throwing impeller at a high speed to rotate; due to the effect of a rotation centrifugal force of the water throwing impeller, the inlet water is thrown onto the inner wall of the flocculation container at a certain speed to wash the flocculation container, and in order to enlarge a water throwing range, the stirring motor is controlled to run at different rotation speed phases.

Further, a bending direction of the stirring impeller is opposite to a rotation direction of the stirring impeller in a stirring process, and the structure of the stirring impeller not only can stir the water flow to accelerate the dissolution of the flocculants, but also can prevent the excessively large water flow from scattering flocculates.

In a flocculant stirring process of the flocculation apparatus described in the present invention, the stirring motor drives the stirring impeller to rotate in a direction opposite to a bending direction of the stirring impeller; in a process of washing the inner wall of the flocculation container, the stirring motor drives the stirring impeller to rotate in a direction the same to the bending direction of the stirring impeller; since the water throwing impeller and the stirring impeller are installed on the same stirring shaft, the water throwing impeller throws the inlet water onto the inner wall of the flocculation container to perform washing at the moment, while the structure of the stirring impeller can greatly stir the water flow to perform the washing, the stirring effect is completely opposite to the stirring effect of the flocculation process, and the rotation speed of the stirring motor in the washing process is higher than that of the stirring motor in a flocculant stirring process.

Further, the water throwing impeller includes a turntable and blades arranged on an upper surface of the turntable, wherein the blades extend from the center of the turntable towards a peripheral direction, and the upper surface of the turntable is divided by every two adjacent blades into a plurality of fan-shaped regions for throwing the water.

Further, the upper surface of the turntable of the water throwing impeller is further provided with an annular retaining rib concentric with a center of the turntable, and one end of each blade extends from the annular retaining rib towards the peripheral direction. The outside region of the annular retaining rib is divided by the plurality of groups of blades into a plurality of small areas, and when the water is thrown, the water flow is scattered, so that the water flow is uniformly thrown onto the peripheral wall.

Further, the flocculation container is provided with a water inlet, a flocculant dispensing opening, a flocculation water outlet and a sewage drain outlet, wherein an inner surface of the bottom of the flocculation container is an inclined surface, and the sewage drain outlet is arranged near a lower side of the inclined surface, thereby facilitating the discharging of sewage washing the flocculation container.

Further, the flocculation container is provided with a water guide trough, wherein one end of the water guide trough is communicated with the water inlet of the flocculation container, the other end of the water guide trough extends to be above the water throwing impeller, and water discharged from the water guide trough is guided onto the fan-shaped regions of the water throwing impeller. Preferably, the water discharging direction of the water guide trough is located above the outer region of the annular retaining rib of the turntable, so that the structure better facilitates the uniform throwing of the inlet water.

Further, the flocculation container is provided with at least one water overflow opening, and preferably provided with two water overflow openings, wherein one water overflow opening is arranged above a side part of the flocculation container, and the other water overflow opening is arranged on the top of the flocculation container. The water inlet of the flocculation container is communicated with a three-way pipeline, one of other two ports of the three-way pipeline is communicated with the inlet water and is disposed at a side part of the three-way pipeline, and the other of other two ports of the three-way pipeline is the water overflow opening arranged on the top of the flocculation container and is disposed on the upper part of the three-way pipeline. The structure prevents the entering overflow water from being directly discharged via the water overflow opening on the top when the water overflow opening on the side part is blocked.

Further, the flocculation container includes a box body with an opening at the upper portion of the box body and an upper cover plate covering the opening of the box body, wherein the upper cover plate is provided with a water inlet and a flocculant dispensing opening, the drive motor is installed on the upper cover plate, and an annular convex rib is arranged on the lower surface of the upper cover plate corresponding to the periphery of a shaft of the drive motor.

The annular convex rib is arranged on the lower surface of the upper cover plate of the flocculation container corresponding to the periphery of a shaft of the drive motor to form a semi-closed chamber; after water continuously enters the flocculation container, a compressed air cavity can be formed in the chamber, namely, an airtight seal can be realized, thereby preventing the water of the flocculation container from overflowing via the periphery of the shaft.

The washing machine of the present invention includes an outer drum, wherein the outer drum, a flocculation apparatus, and the filter apparatus are sequentially and circularly communicated with one another through a pipeline, wherein
the flocculation apparatus includes a flocculation container communicated with the outer drum and a flocculant dispenser for dispensing flocculants into the flocculation container, and the water is discharged from the outer drum into the flocculation container to be flocculated; and
the filter apparatus includes a filter container and a filter mechanism arranged in the filter container, wherein the filter container is respectively communicated with the flocculation container and the outer drum, and the flocculated water in the flocculation container is filtered by the filter mechanism and is then discharged into the outer drum to be reused.

Further, the filter mechanism is rotatably arranged inside the filter container, and the filter apparatus further includes a self-cleaning mechanism utilizing an inlet water flow to drive the filter mechanism to rotate and to spray and wash the filter mechanism.

Further, the filter mechanism includes a cylindrical filter frame and a filter screen arranged on the filter frame, two ends of the filter frame are pivotally connected with the filter container, one end of the filter frame is a rotary connector communicated with a filtered water outlet, and the other end of the filter frame is axially sealed. An inclination angle α is formed between an axial rotation direction of the filter mechanism and a horizontal plane, the inclination angle α satisfies with 0≤α≤30°; and by obliquely or transversely installing the filter mechanism, not only the filter area can be increased and the filter speed can be increased, but also the washing of the filter net is facilitated.

Further, the filter container is provided with a filtered water inlet communicated with the flocculation container, a filtered water outlet for discharging the filtered water, and a sewage drain outlet for discharging the washing waste water, and the filtered water outlet is communicated with the rotary connector of the filter mechanism. A path of filtering a working water flow is as follows: flocculated water from the flocculation container enters the filter container via the filtered water inlet, then enters the cylindrical filter frame after being filtered by a filter screen, and then is discharged from the filtered water outlet via the rotary connector on the end part.

Further, the filtering and self-cleaning mechanism includes a spray head, the spray head is installed on the filter container, and a direction of sprayed water acts on the surface of the filter mechanism to drive the filter mechanism to rotate. The spray direction of the spray head is a direction approximately tangential with the cylindrical filter frame; and since the filter mechanism is arranged obliquely to form a small angle with a horizontal plane, and the pressure and the gravity of the sprayed water act on the surface of the filter frame, an impact force for driving the filter mechanism to rotate is increased.

Further, the self-cleaning mechanism further includes a paddle arranged on the surface of the filter mechanism, and the paddle is configured to correspond to a spray direction of the spray head so as to transfer a driving force for driving the rotation of the filter mechanism by the water flow.

The water recycling treatment method of the washing machine of the present invention is as follows: after the washing is ended, the discharged water sequentially flocculated by the flocculation apparatus, filtered by the filter apparatus and is then discharged into the outer drum for rinsing; the foregoing water treatment process is circulated until the rinsing is ended; the sewage drain outlet of the flocculation container and the sewage drain outlet of the filter container are opened; and the water in the outer drum is discharged into the flocculation container to carry out washing, and meanwhile, clean water enters the filter apparatus to wash the filter apparatus.

Further, the washing machine of the present invention further includes an automatic detergent dispensing device, wherein the automatic detergent dispensing device is the existing art and is preferably a structure for dispensing the detergents by utilizing the negative pressure of the inlet water; the flocculant dispenser described in the present invention is also an automatic dispensing structure, and the flocculants of a corresponding ratio are automatically dispensed for the flocculation at every time according to the washing water volume and the turbidity of the washing/rinsing water; preferably, if the flocculants are in a flaky shape, the existing automatic flaky detergent dispensing structure can be adopted, and if the flocculants are particles or powder, a quantitative dispensing structure of the existing art is adopted.

Further, it is judged whether the flocculation treatment is required or not according to a detected turbidity degree of the post-washing wash water; and when the turbidity degree is relatively high, the post-washing water can be directly completely discharged, clean water re-enters for rinsing, and after the first rinsing, the water is flocculated and recycled for rinsing; or according to a range of the turbidity degree, the wash water of a given ratio is discharged, the turbidity degree is decreased by feeding tap water, and then the wash water is flocculated and recycled for rinsing.

After the above-mentioned technical solution is adopted, compared with the existing art, the present invention has the beneficial effects as follows.

The washing machine of the present invention adopts the flocculation filtering type water recycling and saving equipment, and the whole washing process can be completed by injecting the water at one time, so the water resources are maximally saved, while the washing efficiency is not influenced; by adopting the stirring structure completely opposite to the design of the existing stirring impeller, not only the mixing of the flocculants and the washing sewage is accelerated, but also the flocculates can be prevented from being scattered, and the structure is simple; both the flocculation apparatus and a filter apparatus are self-cleaned, so a step for manually clearing the flocculation container and the filter mechanism is omitted, an automation degree is increased, the structure is simple, and energy consumption can be saved.

### BRIEF DESCRIPTION OF DRAWINGS

Fig. 1 is a schematic diagram showing a sectional structure of a washing machine in the present invention;
Fig. 2 is a schematic diagram of connection of a flocculation device for recycling water of a washing machine of the present invention;
Fig. 3 is a schematic diagram showing a sectional structure of a flocculation apparatus described in the present invention;
Fig. 4 is a schematic diagram showing a structure of another flocculation apparatus described in the present invention;
Fig. 5 is a schematic diagram showing a sectional structure of another flocculation apparatus described in the present invention;
Fig. 6 is a schematic diagram showing structures of a stirring mechanism and a washing mechanism described in the present invention;
Fig. 7 is a schematic diagram showing a sectional structure of a filter apparatus described in the present invention; and
Fig. 8 is a structural schematic diagram of a flocculation apparatus and a filter apparatus described in the present invention.

### Detailed Description

Specific embodiments of the present invention are further described below in details with reference to the attached drawings.

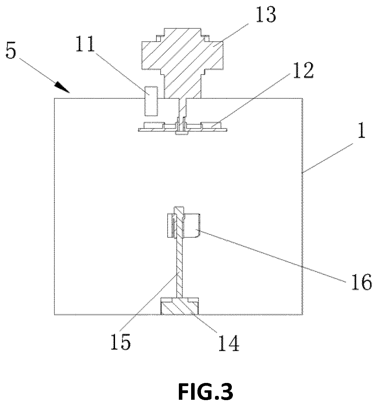

As shown in Fig. 3 to Fig. 6, a flocculation apparatus 5 of a washing machine described in the present invention has a self-cleaning function and is washed by utilizing inlet water thrown towards an inner wall. The flocculation apparatus 5 includes a flocculation container 1 and a stirring mechanism, and further includes a washing mechanism for scouring an inner wall of the flocculation container, the washing mechanism includes a water throwing impeller 12 and a drive motor 13 for driving the water throwing impeller 12 to rotate, and the inlet water is thrown by the water throwing impeller 12 to the inner wall of the flocculation container 1 to perform washing. The stirring mechanism includes a stirring motor 14 installed outside the flocculation container 1, a stirring shaft 15 extending into the flocculation container 1 and a stirring impeller 16 installed on the stirring shaft 15.

### Embodiment I

As shown in Fig. 3, the drive motor 13 described in the present embodiment is arranged above the flocculation container, the stirring motor 14 is arranged at the bottom of the flocculation container 1, and the stirring shaft 15 extends upwards into the flocculation container 1.

Besides the above installation structure, the stirring motor 14 can also be arranged at a side part of the flocculation container 1, the stirring shaft 15 extends from the side part into the flocculation container 1, or the stirring motor 14 and the drive motor 13 are arranged above the flocculation container (Not shown in the drawing).

### Embodiment II

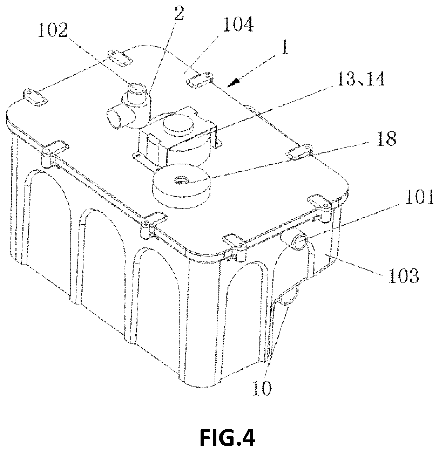

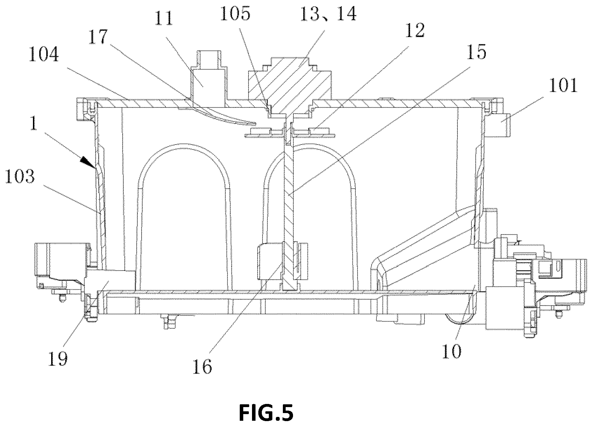

As shown in Fig. 4 and Fig. 5, the present embodiment is further improved on the basis of the embodiment I; the drive motor 13 for driving the water throwing impeller 12 to rotate is also the stirring motor 14, namely, the drive motor 13 and the stirring motor 14 are a same motor; the water throwing impeller 12 is coaxially installed on the stirring shaft 15, and the stirring impeller 16 is installed at the bottom end of the stirring shaft 15; the water throwing impeller 12 is installed on a position of the stirring shaft 15 adjacent to the stirring motor 14; when inlet water enters for washing the flocculation container 1, the stirring motor 14 drives the water throwing impeller at a high speed to rotate; and due to the effect of a rotation centrifugal force of the water throwing impeller 12, the inlet water is thrown onto the inner wall of the flocculation container 1 at a certain speed to wash the flocculation container; and in order to enlarge a water throwing range, the stirring motor 14 is controlled to run at different rotation speed phases, therefore, the thrown water can fall onto the inner wall of the flocculation container 1 at different heights.

A bending direction of the stirring impeller 16 is opposite to a rotation direction of the stirring shaft 15 in a stirring process, and the structure not only can stir the water flow to accelerate the dissolution of the flocculants, but also can prevent the excessively large water flow from scattering flocculates.

In a flocculant stirring process of the flocculation apparatus described in the present embodiment, the stirring motor 14 drives the stirring impeller 16 to rotate in a direction opposite to the bending direction of the stirring impeller 16; in a process of washing the inner wall of the flocculation container, the stirring motor 14 drives the stirring impeller 16 to rotate in a direction the same to the bending direction of the stirring impeller 16; since the water throwing impeller 12 and the stirring impeller 16 are installed on the same stirring shaft 15, the water throwing impeller 12 throws the inlet water onto the inner wall of the flocculation container 1 to perform the washing at the moment, while the structure of the stirring impeller 16 can greatly stir the water flow to perform the washing, the stirring effect is completely opposite to the stirring effect of the flocculation process, and the rotation speed of the stirring motor 14 in the washing process is higher than that of the stirring motor 14 in the flocculant stirring process.

### Embodiment III

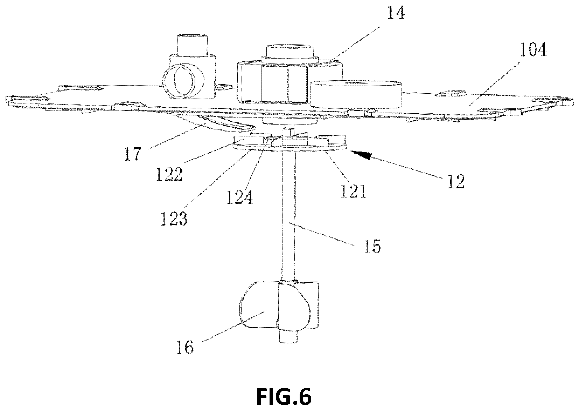

As shown in Fig. 5 and Fig. 6, a water guide trough 17 is arranged inside the flocculation container 1 and is used to guide the inlet water onto the water throwing impeller 12 via a water inlet 11 of the flocculation container. The structure of the water guide trough 17 is not necessary. As shown in Fig. 3, the water inlet 11 is arranged above the water throwing impeller 12, and the inlet water is directly led to the water throwing impeller 12.

The water entering the water inlet 11 for washing may be the post-washing water of the washing machine or may be the clean water, or a three-way valve is installed to be respectively receive tap water and the washing water of the washing machine, the post-washing water enters for circulating treatment, and the clean water enters for washing.

### Embodiment IV

As shown in Fig. 6, the water throwing impeller 12 described in the present embodiment includes a turntable 121 and blades 122 arranged on an upper surface of the turntable 121, wherein the blades 122 extend from the center of the turntable 121 towards a peripheral direction, and the upper surface of the turntable 121 is divided by every two adjacent blades 122 into a plurality of fan-shaped regions 123 for throwing the water. The water guide trough 17 guides water onto the fan-shaped regions 123 of the water throwing impeller.

Further, the upper surface of the turntable 121 of the water throwing impeller is further provided with an annular retaining rib 124 concentric with a center of the turntable, and one end of each blade 122 extends from the annular retaining rib 124 towards the peripheral direction. An outer region of the annular retaining rib is divided by the plurality of groups of blades 122 into a plurality of small areas, and the water guide trough guides the water to be above the outer region of the annular retaining rib of the turntable; the structure facilitates the uniform throwing of the inlet water; and when the water is thrown, the water flow is scattered, so that the water flow is uniformly thrown onto the peripheral wall.

### Embodiment V

As shown in Fig. 4 and Fig. 5, the flocculation container 1 described in the present invention is provided with a water inlet 11, a flocculant dispensing opening 18, a flocculation water outlet 19 and a sewage drain outlet 10, wherein one end of the water guide trough 17 is communicated with the water inlet 11 of the flocculation container, the other end of the water guide trough extends to be above the water throwing impeller 12, the inner surface of the bottom of the flocculation container 1 is an inclined surface, and the sewage drain outlet 10 is arranged near a lower side of the inclined surface. An inclination angle of the inclined surface is preferably 0 to 10°, and the inclination angle facilitates the discharging of sewage washing the flocculation container.

Further, the flocculation container 1 is provided with at least one water overflow opening, and preferably provided with two water overflow openings 101, 102, wherein the water overflow opening 101 is arranged above the side part of the flocculation container 1, and the water overflow opening 102 is arranged on the top of the flocculation container 1. The water inlet of 11 the flocculation container is communicated with a three-way pipeline 2, one of other two ports of the three-way pipeline 2 is communicated with the inlet water and disposed at a side part of the three-way pipeline 2, and the other of other two ports is the water overflow opening 102 arranged on the top of the flocculation container and is disposed on the upper part of the three-way pipeline. The structure prevents the entering overflow water from being directly discharged via the water overflow opening arranged on the top of the flocculation container when the water overflow opening on the side part is blocked.

Further, the flocculation container 1 includes a box body 103 with an opening at the upper portion of the box body and an upper cover plate 104 covering the opening of the box body, wherein the upper cover plate 104 is provided with a water inlet 11 and a flocculant dispensing opening 18, the drive motors 13, 14 are installed on the upper cover plate 104, and an annular convex rib 105 is arranged on the lower surface of the upper cover plate 104 corresponding to the periphery of a shaft of the drive motor (referring to Fig. 5).

In the present invention, the annular convex rib 105 is arranged on the lower surface of the upper cover plate 104 of the flocculation container corresponding to the periphery of a shaft of the drive motor to form a semi-closed chamber; when water continuously enters the flocculation container, a compressed air cavity can be formed in the chamber, namely, an airtight seal can be realized, thereby preventing the water of the flocculation container from overflowing via the periphery of the shaft.

### Embodiment VI

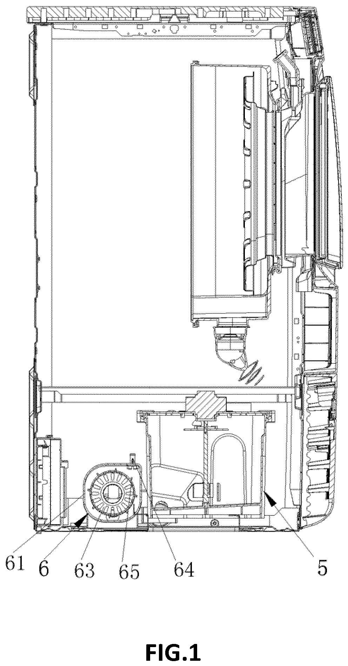

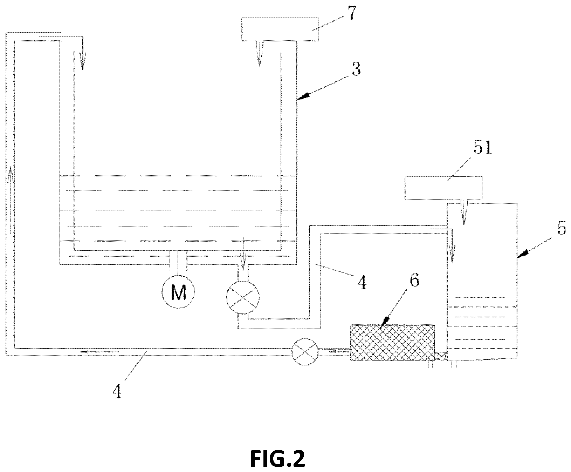

As shown in Fig. 1 and Fig. 2, the washing machine described in the present invention includes but not limited to an impeller washing machine and a drum washing machine; the washing machine includes an outer drum 3, wherein the outer drum 3, a flocculation apparatus 5, and a filter apparatus 6 are sequentially and circularly communicated with one another through a pipeline 4; the flocculation apparatus 5 includes a flocculation container 1 communicated with the outer drum and a flocculant dispenser 51 for dispensing flocculants into the flocculation container 1, and water is discharged from the outer drum 3 into the flocculation container 1 to be flocculated; and the filter apparatus 6 includes a filter container and a filter mechanism arranged in the filter container; the filter container is respectively communicated with the flocculation container 1 and the outer drum 3, and the flocculated water in the flocculation container 1 is filtered by the filter mechanism and is then discharged into the outer drum 3 to be reused.

### Embodiment VII

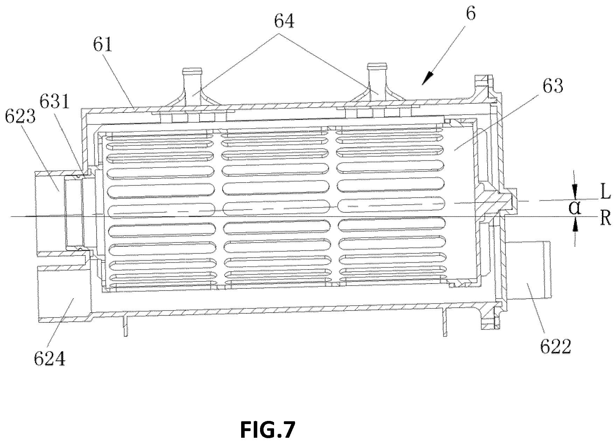

As shown in Fig. 7, a filter mechanism described in the present embodiment includes a cylindrical filter frame 63 and a filter screen (not shown in the drawing) arranged on the filter frame 63; two ends of the filter frame 63 are pivotally connected with the filter container 61; one end of the filter frame is a rotary connector 631 communicated with a filtered water outlet 623, the other end of the filter frame is axially sealed; and an inclination angle α is formed between an axial rotation direction L of the filter mechanism and a horizontal plane R, the inclination angle α satisfies with 0≤α≤30°. By obliquely or transversely installing the filter mechanism, not only the filter area can be enlarged and the filter speed be increased, but also the washing of the filter net is facilitated.

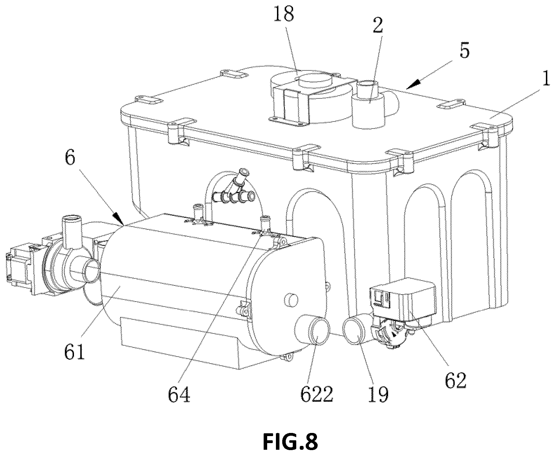

The filter container 61 described in the present embodiment is provided with a filtered water inlet 622 communicated with the flocculation container 1, a filtered water outlet 623 for discharging the filtered water and a sewage drain outlet 624 for discharging the washing waste water, and the filtered water outlet 623 is communicated with the rotary connector 631 at one end of the filter mechanism. As shown in Fig. 8, the filtered water inlet 622 is communicated with a flocculation water outlet 19, and a control valve 62 is arranged between the filtered water inlet 622 and the flocculation water outlet 19; and a path of filtering a working water flow is as follows: flocculated water from the flocculation container enters the filter container 61 via the filtered water inlet 622, then enters the cylindrical filter frame 63 after being filtered by a filter screen, and then is discharged from the filtered water outlet 623 via the rotary connector 631 on the end part.

### Embodiment VIII

As shown in Fig. 1 and Fig. 7, the self-cleaning mechanism includes a spray head 64, the spray head 64 is installed on the filter container 61, and a direction of the sprayed water acts on the surface of the filter mechanism to drive the filter mechanism to rotate. The spray direction of the spray head 64 is a direction approximately tangential with the cylindrical filter frame 63; and since the filter mechanism is arranged obliquely to form a small angle with a horizontal plane, and the pressure and the gravity of the sprayed water act on the surface of the filter frame 63, an impact force for driving the filter mechanism to rotate is increased.

Further, the self-cleaning mechanism further includes a paddle 65 (referring to Fig. 1) arranged on the surface of the filter frame 63, and the paddle 65 is configured to correspond to a spray direction of the spray head 64 so as to transfer a driving force for driving the rotation of the filter mechanism by the water flow.

As shown in Fig. 7 and Fig. 8, the filtered water inlet 622 is communicated with the flocculation water outlet 19, and a control valve 62 is arranged between the filtered water inlet 622 and the flocculation water outlet 19.

The water recycling treatment method of the washing machine of the present invention is as follows: after the washing is ended, the water is sequentially flocculated by the flocculation apparatus and filtered by the filter apparatus; then the water is discharged into the outer drum for rinsing, the foregoing water treatment process is circulated until the rinsing is ended; the sewage drain outlet of the flocculation container and the sewage drain outlet of the filter container are opened; and the water in the outer drum is discharged into the flocculation apparatus to carry out washing, and meanwhile clean water enters the filter apparatus to wash the filter apparatus.

Further, the washing machine of the present invention further includes an automatic detergent dispensing device 7, wherein the automatic detergent dispensing device 7 is the existing art and is preferably a structure for dispensing the detergents by utilizing the negative pressure of the inlet water; the flocculant dispenser 51 described in the present invention is also an automatic dispensing structure, and the flocculants of a corresponding ratio are automatically dispensed for the flocculation at every time according to the washing water volume and the turbidity of the washing/rinsing water; and if the flocculants are in a flaky shape, the existing automatic flaky detergent dispensing structure can be adopted, and if the flocculants are particles or powder, a quantitative dispensing structure of the existing art is adopted.

The implementation solutions in the above embodiments can be further combined or replaced. Moreover, the embodiments are only preferred embodiments for describing the present invention but are not used to limit the concept and scope of the present invention. Various alterations and modifications made by those skilled in the art to the technical solutions of the present invention without departing from the design concept of the present invention fall within the protection scope of the present invention.

## Claims

1. A flocculation apparatus (5) of a washing machine with a self-cleaning function, comprising a flocculation container (1) and a stirring mechanism, and **characterized by** further comprising a washing mechanism for scouring an inner wall of the flocculation container (1), wherein the washing mechanism comprises a water throwing impeller (12) and a drive motor (13) for driving the water throwing impeller (12) to rotate, and the inlet water is thrown by the water throwing impeller (12) to the inner wall of the flocculation container (1) to perform washing;
wherein the flocculation container (1) is provided with a water inlet (11), a flocculant dispensing opening (18), a flocculation water outlet (19) and a sewage drain outlet (10), wherein an inner surface of a bottom of the flocculation container (1) is an inclined surface, and the sewage drain outlet is arranged near a lower side of the inclined surface for facilitating discharging of sewage washing the flocculation container (1);
wherein the stirring mechanism comprises a stirring motor (14) installed outside the flocculation container (1), a stirring shaft (15) extending into the flocculation container (1) and a stirring impeller (16) installed on the stirring shaft (15);
wherein the drive motor (13) is the stirring motor (14), and the water throwing impeller (12) is coaxially installed on the stirring shaft (15) and is positioned between the stirring motor (14) and the stirring impeller (16).

2. The flocculation apparatus (5) of a washing machine with a self-cleaning function according to claim 1, wherein a bending direction of the stirring impeller (16) is opposite to a rotation direction of the stirring impeller (16) in a stirring process.

3. The flocculation apparatus (5) of a washing machine with a self-cleaning function according to claim 1-or 2, wherein the water throwing impeller (12) comprises a turntable (121) and blades (122) arranged on an upper surface of the turntable (121), wherein the blades (122) extend from the center of the turntable (121) towards a peripheral direction, and the upper surface of the turntable (121) is divided by every two adjacent blades (122) into a plurality of fan-shaped regions for throwing the water.

4. The flocculation apparatus (5) of a washing machine with a self-cleaning function according to claim 3, wherein the upper surface of the turntable (121) of the water throwing impeller (12) is further provided with an annular retaining rib concentric with a center of the turntable (121), and one end of each blade (122) extends from the annular retaining rib towards the peripheral direction.

5. The flocculation apparatus (5) of a washing machine with a self-cleaning function according to claim 3, wherein the flocculation container (1) is provided with a water guide trough; one end of the water guide trough is communicated with the water inlet (11) of the flocculation container (1), the other end of the water guide trough is extended to be above the water throwing impeller (12), and water discharged from the water guide trough is guided onto the fan-shaped regions of the water throwing impeller (12).

6. The flocculation apparatus (5) of a washing machine with a self-cleaning function according to claim 1, wherein the flocculation water outlet (19) is arranged near the lower side of the inclined surface.

7. The flocculation apparatus (5) of a washing machine with a self-cleaning function according to claim 6, wherein the flocculation container (1) is provided with at least one water overflow opening (101), and preferably provided with two water overflow openings (101), wherein one water overflow opening (101) is arranged above a side part of the flocculation container (1), and the other water overflow opening (101) is arranged on the top of the flocculation container (1).

8. The flocculation apparatus (5) of a washing machine with a self-cleaning function according to claim 1, wherein the flocculation container (1) comprises a box body with an opening at the upper portion of the box body and an upper cover plate (104) covering the opening of the box body, wherein the upper cover plate (104) is provided with a water inlet and a flocculant dispensing opening (18), the drive motor (13) is installed on the upper cover plate (104), and an annular convex rib is arranged on a lower surface of the upper cover plate (104) corresponding to the periphery of a shaft of the drive motor (13).

9. A washing machine having the flocculation apparatus (5) of any one of claims 1-8, comprising an outer drum (3), wherein the outer drum (3), the flocculation apparatus (5), and a filter apparatus (6) are sequentially and circularly communicated with one another through a pipeline (4), wherein:
the flocculation apparatus (5) comprises a flocculation container (1) communicated with the outer drum (3) and a flocculant dispenser (51) for dispensing flocculants into the flocculation container (1), and the water is discharged from the outer drum (3) into the flocculation container (1) to be flocculated; and
the filter apparatus (6) comprises a filter container (61) and a filter mechanism arranged inside the filter container (61), wherein the filter container (61) is respectively communicated with the flocculation container (1) and the outer drum (3), and the flocculated water in the flocculation container (1) is filtered by the filter mechanism and is then discharged into the outer drum (3) to be reused.

10. The washing machine according to claim 9, wherein the filter mechanism is rotatably arranged inside the filter container (61), and the filter apparatus (6) further comprises a self-cleaning mechanism utilizing an inlet water flow to drive the filter mechanism to rotate and to spray and wash the filter mechanism.

11. The washing machine according to claim 10, wherein the filter mechanism comprises a cylindrical filter frame (63) and a filter screen arranged on the filter frame (63), two ends of the filter frame (63) are pivotally connected with the filter container (61), one end of the filter frame (63) is a rotary connector (631), and the other end of the filter frame (63) is axially sealed; and an inclination angle α is formed between an axial rotation direction of the filter mechanism and a horizontal plane, the inclination angle α satisfies with 0≤α≤30°.

12. The washing machine according to claim 11, wherein the filter container (61) is provided with a filtered water inlet (622) communicated with the flocculation container (1), a filtered water outlet (63) for discharging the filtered water, and a sewage drain outlet (624) for discharging the washing waste water, and the filtered water outlet (63) is communicated with the rotary connector (631) of the filter mechanism.

13. The washing machine according to claim 10, wherein the self-cleaning mechanism comprises a spray head (64), the spray head (64) is installed on the filter container (61), and a direction of sprayed water acts on a surface of the filter mechanism to drive the filter mechanism to rotate.

## Patentansprüche

1. Flockungsvorrichtung (5) einer Waschmaschine mit einer Selbstreinigungsfunktion, umfassend einen Flockungsbehälter (1) und einen Rührmechanismus, und **gekennzeichnet durch** ferner umfassend einen Waschmechanismus zum Reinigen einer Innenwand des Flockungsbehälters (1), wobei der Waschmechanismus ein wasserabschleuderndes Flügelrad (12) und einen Antriebsmotor (13) umfasst, um das wasserabschleudernde Flügelrad (12) in Drehung zu versetzen, und das Einlaufwasser durch das wasserabschleudernde Flügelrad (12) zur Innenwand des Flockungsbehälters (1) abgeschleudert wird, um Waschen durchzuführen;
wobei der Flockungsbehälter (1) mit einem Wassereinlass (11), einer Flockungsmittelabgabeöffnung (18), einem Flockungswasserauslass (19) und einem Abwasserablaufauslass (10) versehen ist, wobei eine innere Oberfläche eines Bodens des Flockungsbehälters (1) eine geneigte Oberfläche ist und der Abwasserablaufauslass in der Nähe einer unteren Seite der geneigten Oberfläche angeordnet ist, um Abführung von Abwasser, waschend den Flockungsbehälter (1), zu ermöglichen;
wobei der Rührmechanismus einen außerhalb des Flockungsbehälters (1) angebrachten Rührmotor (14), eine sich in den Flockungsbehälter (1) erstreckende Rührwelle (15) und ein an der Rührwelle (15) angebrachtes Rührflügelrad (16) umfasst;
wobei der Antriebsmotor (13) der Rührmotor (14) ist und das wasserabschleudernde Flügelrad (12) koaxial an der Rührwelle (15) angebracht ist und zwischen dem Rührmotor (14) und dem Rührflügelrad (16) positioniert ist.

2. Flockungsvorrichtung (5) einer Waschmaschine mit einer Selbstreinigungsfunktion nach Anspruch 1, wobei eine Biegerichtung des Rührflügelrades (16) zu einer Drehrichtung des Rührflügelrades (16) in einem Rührprozess entgegengesetzt ist.

3. Flockungsvorrichtung (5) einer Waschmaschine mit einer Selbstreinigungsfunktion nach Anspruch 1 oder 2, wobei das wasserabschleudernde Flügelrad (12) eine Drehscheibe (121) und auf einer oberen Oberfläche der Drehscheibe (121) angeordnete Flügel (122) umfasst, wobei sich die Flügel (122) vom Zentrum der Drehscheibe (121) zu einer peripheren Richtung erstrecken und die obere Oberfläche der Drehscheibe (121) durch je zwei benachbarte Flügel (122) in eine Vielzahl von fächerförmigen Bereichen zum Abschleudern des Wassers unterteilt ist.

4. Flockungsvorrichtung (5) einer Waschmaschine mit einer Selbstreinigungsfunktion nach Anspruch 3, wobei die obere Oberfläche der Drehscheibe (121) des wasserabschleudernden Flügelrades (12) ferner mit einer ringförmigen Halterippe versehen ist, die konzentrisch zu einem Zentrum der Drehscheibe (121) ist, und sich ein Ende jedes Flügels (122) von der ringförmigen Halterippe zur peripheren Richtung erstreckt.

5. Flockungsvorrichtung (5) einer Waschmaschine mit einer Selbstreinigungsfunktion nach Anspruch 3, wobei der Flockungsbehälter (1) mit einer Wasserführungsrinne versehen ist; ein Ende der Wasserführungsrinne mit dem Wassereinlass (11) des Flockungsbehälters (1) verbunden ist, wobei das andere Ende der Wasserführungsrinne über das wasserabschleudernde Flügelrad (12) hinaus verlängert ist und das aus der Wasserführungsrinne abgegebene Wasser auf die fächerförmigen Bereiche des wasserabschleudernden Flügelrades (12) geleitet wird.

6. Flockungsvorrichtung (5) einer Waschmaschine mit einer Selbstreinigungsfunktion nach Anspruch 1, wobei der Flockungswasserauslass (19) in der Nähe der unteren Seite der geneigten Oberfläche angeordnet ist.

7. Flockungsvorrichtung (5) einer Waschmaschine mit einer Selbstreinigungsfunktion nach Anspruch 6, wobei der Flockungsbehälter (1) mit zumindest einer Wasserüberlauföffnung (101) versehen ist, und vorzugsweise mit zwei Wasserüberlauföffnungen (101) versehen ist, wobei eine Wasserüberlauföffnung (101) über einem Seitenteil des Flockungsbehälters (1) angeordnet ist und die andere Wasserüberlauföffnung (101) auf der Oberseite des Flockungsbehälters (1) angeordnet ist.

8. Flockungsvorrichtung (5) einer Waschmaschine mit einer Selbstreinigungsfunktion nach Anspruch 1, wobei der Flockungsbehälter (1) einen Kastenkörper mit einer Öffnung am oberen Abschnitt des Kastenkörpers und eine obere Abdeckplatte (104) umfasst, die die Öffnung des Kastenkörpers abdeckt, wobei die obere Abdeckplatte (104) mit einem Wassereinlass und einer Flockungsmittelabgabeöffnung (18) versehen ist, der Antriebsmotor (13) an der oberen Abdeckplatte (104) angebracht ist und eine ringförmige konvexe Rippe an einer unteren Oberfläche der oberen Abdeckplatte (104) entsprechend der Peripherie einer Welle des Antriebsmotors (13) angeordnet ist.

9. Waschmaschine, aufweisend die Flockungsvorrichtung (5) nach einem der Ansprüche 1 bis 8, umfassend eine Außentrommel (3), wobei die Außentrommel (3), die Flockungsvorrichtung (5) und eine Filtervorrichtung (6) sequentiell und kreisförmig über eine Rohrleitung (4) miteinander verbunden sind, wobei:
die Flockungsvorrichtung (5) einen mit der Außentrommel (3) verbundenen Flockungsbehälter (1) und einen Flockungsmittelabgeber (51) zum Abgeben von Flockungsmitteln in den Flockungsbehälter (1) umfasst, und das Wasser aus der Außentrommel (3) in den zu flockenden Flockungsbehälter (1) abgegeben wird; und
die Filtervorrichtung (6) einen Filterbehälter (61) und einen Filtermechanismus umfasst, die innerhalb des Filterbehälters (61) angeordnet sind, wobei der Filterbehälter (61) jeweils mit dem Flockungsbehälter (1) und der Außentrommel (3) verbunden ist, und das Flockwasser im Flockungsbehälter (1) durch den Filtermechanismus gefiltert und dann in die Außentrommel (3) zur Wiederverwendung abgegeben wird.

10. Waschmaschine nach Anspruch 9, wobei der Filtermechanismus innerhalb des Filterbehälters (61) drehbar angeordnet ist, und die Filtervorrichtung (6) ferner einen Selbstreinigungsmechanismus umfasst, der einen Einlaufwasserstrom nutzt, um den Filtermechanismus in Drehung zu versetzen und den Filtermechanismus zu bespritzen und zu waschen.

11. Waschmaschine nach Anspruch 10, wobei der Filtermechanismus einen zylindrischen Filterrahmen (63) und ein am Filterrahmen (63) angeordnetes Filtersieb umfasst, zwei Enden des Filterrahmens (63) mit dem Filterbehälter (61) schwenkbar verbunden sind, ein Ende des Filterrahmens (63) ein Drehverbinder (631) ist und das andere Ende des Filterrahmens (63) axial abgedichtet ist; und ein Neigungswinkel α zwischen einer axialen Drehrichtung des Filtermechanismus und einer horizontalen Ebene gebildet ist, wobei der Neigungswinkel α 0≤α≤30° erfüllt.

12. Waschmaschine nach Anspruch 11, wobei der Filterbehälter (61) mit einem mit dem Flockungsbehälter (1) verbundenen Filterwassereinlass (622), einem Filterwasserauslass (63) zum Abgeben des gefilterten Wassers und einem Abwasserablaufauslass (624) zum Abgeben des Waschabwassers versehen ist und der Filterwasserauslass (63) mit dem Drehverbinder (631) des Filtermechanismus verbunden ist.

13. Waschmaschine nach Anspruch 10, wobei der selbstreinigende Mechanismus einen Spritzkopf (64) umfasst, der Spritzkopf (64) am Filterbehälter (61) angebracht ist und eine Führung des Spritzwassers auf eine Oberfläche des Filtermechanismus wirkt, um den Filtermechanismus in Drehung zu versetzen.

## Revendications

1. Appareil de floculation (5) d'une machine à laver avec une fonction autonettoyante, comprenant un récipient de floculation (1) et un mécanisme d'agitation, et **caractérisé en ce qu'**il comprend en outre un mécanisme de lavage pour récurer une paroi interne du récipient de floculation (1), dans lequel le mécanisme de lavage comprend une roue de jet d'eau (12) et un moteur d'entraînement (13) pour entraîner la rotation de la roue de jet d'eau (12), et l'eau d'entrée est expulsée par la roue de jet d'eau (12) sur la paroi interne du récipient de floculation (1) pour réaliser le lavage ;
dans lequel le récipient de floculation (1) est prévu avec une entrée d'eau (11), une ouverture de distribution de floculant (18), une sortie d'eau de floculation (19) et une sortie d'évacuation d'eaux usées (10), dans lequel une surface interne d'un fond du récipient de floculation (1) est une surface inclinée, et la sortie d'évacuation d'eaux usées est agencée à proximité d'un côté inférieur de la surface inclinée pour faciliter la décharge des eaux usées lavant le récipient de floculation (1) ;
dans lequel le mécanisme d'agitation comprend un moteur d'agitation (14) installé à l'extérieur du récipient de floculation (1), un arbre d'agitation (15) s'étendant dans le récipient de floculation (1) et une roue d'agitation (16) installée sur l'arbre d'agitation (15) ;
dans lequel le moteur d'entraînement (13) est le moteur d'agitation (14), et la roue de jet d'eau (12) est installée de manière coaxiale sur l'arbre d'agitation (15) et est positionnée entre le moteur d'agitation (14) et la roue d'agitation (16).

2. Appareil de floculation (5) d'une machine à laver avec une fonction autonettoyante selon la revendication 1, dans lequel une direction de courbure de la roue d'agitation (16) est opposée à une direction de rotation de la roue d'agitation (16) dans un processus d'agitation.

3. Appareil de floculation (5) d'une machine à laver avec une fonction autonettoyante selon la revendication 1 ou 2, dans lequel la roue de jet d'eau (12) comprend une plaque tournante (121) et des aubes (122) agencées sur une surface supérieure de la plaque tournante (121), dans lequel les aubes (122) s'étendent à partir du centre de la plaque tournante (121) vers la direction périphérique, et la surface supérieure de la plaque tournante (121) est divisée toutes les deux aubes (122) adjacentes en une pluralité de régions en forme d'éventail pour expulser l'eau.

4. Appareil de floculation (5) d'une machine à laver avec une fonction autonettoyante selon la revendication 3, dans lequel la surface supérieure de la plaque tournante (121) de la roue de jet d'eau (12) est en outre prévue avec une nervure de retenue annulaire concentrique avec un centre de la plaque tournante (121), et une extrémité de chaque aube (122) s'étend à partir de la nervure de retenue annulaire vers la direction périphérique.

5. Appareil de floculation (5) d'une machine à laver avec une fonction autonettoyante selon la revendication 3, dans lequel le récipient de floculation (1) est prévu avec un creux de guide d'eau ; une extrémité du creux de guide d'eau communique avec l'entrée d'eau (11) du récipient de floculation (1), l'autre extrémité du creux de guide d'eau est étendue pour être au-dessus de la roue de jet d'eau (12), et l'eau déchargée du creux de guide d'eau est guidée sur les régions en forme d'éventail de la roue de jet d'eau (12).

6. Appareil de floculation (5) d'une machine à laver avec une fonction autonettoyante selon la revendication 1, dans lequel la sortie d'eau de floculation (19) est agencée à proximité du côté inférieur la surface inclinée.

7. Appareil de floculation (5) d'une machine à laver avec une fonction autonettoyante selon la revendication 6, dans lequel le récipient de floculation (1) est prévu avec au moins une ouverture de trop-plein d'eau (101), et de préférence prévu avec deux ouvertures de trop-plein d'eau (101), dans lequel une ouverture de trop-plein d'eau (101) est agencée au-dessus d'une partie latérale du récipient de floculation (1), et l'autre ouverture de trop-plein d'eau (101) est agencée sur le dessus du récipient de floculation (1).

8. Appareil de floculation (5) d'une machine à laver avec une fonction autonettoyante selon la revendication 1, dans lequel le récipient de floculation (1) comprend un corps de boîte avec une ouverture au niveau de la partie supérieure du corps de boîte et une plaque de couvercle supérieure (104) recouvrant l'ouverture du corps de boîte, dans lequel la plaque de couvercle supérieure (104) est prévue avec une entrée d'eau et une ouverture de distribution de floculant (108), le moteur d'entraînement (13) est installé sur la plaque de couvercle supérieure (104) et une nervure convexe annulaire est agencée sur une surface inférieure de la plaque de couvercle supérieure (104) correspondant à la périphérie d'un arbre du moteur d'entraînement (13).

9. Machine à laver disposant de l'appareil de floculation (5) selon l'une quelconque des revendications 1 à 8, comprenant un tambour externe (3), le tambour externe (3), l'appareil de floculation (5) et un appareil de filtre (6) communiquant de manière séquentielle et circulaire les uns avec les autres par le biais d'une conduite (4), dans laquelle :
l'appareil de floculation (5) comprend un récipient de floculation (1) qui communique avec le tambour externe (3) et un distributeur de floculant (51) pour distribuer des floculants dans le récipient de floculation (1), et l'eau est déchargée du tambour externe (3) dans le récipient de floculation (1) pour être floculée ; et
l'appareil de filtre (6) comprend un récipient de filtre (61) et un mécanisme de filtre agencé à l'intérieur du récipient de filtre (61), dans laquelle le récipient de filtre (61) communique respectivement avec le récipient de floculation (1) et le tambour externe (3), et l'eau floculée dans le récipient de floculation (1) est filtrée par le mécanisme de filtre et est ensuite déchargée dans le tambour externe (3) pour être réutilisée.

10. Machine à laver selon la revendication 9, dans laquelle le mécanisme de filtre est agencé, en rotation, à l'intérieur du récipient de filtre (61), et l'appareil de filtre (6) comprend en outre un mécanisme d'auto-nettoyage utilisant un écoulement d'eau d'entrée pour entraîner la rotation du mécanisme de filtre et pulvériser et laver le mécanisme de filtre.

11. Machine à laver selon la revendication 10, dans laquelle le mécanisme de filtre comprend un bâti de filtre cylindrique (63) et un tamis agencé sur le bâti de filtre (63), deux extrémités du bâti de filtre (63) sont raccordées, de manière pivotante, avec le récipient de filtre (61), une extrémité du bâti de filtre (63) est un connecteur rotatif (631), et l'autre extrémité du bâti de filtre (63) est scellée, de manière axiale ; et un angle d'inclinaison α est formé entre une direction de rotation axiale du mécanisme de filtre et un plan horizontal, l'angle d'inclinaison α satisfait 0 ≤ α ≤ 30°.

12. Machine à laver selon la revendication 11, dans laquelle le récipient de filtre (61) est prévu avec une entrée d'eau filtrée (622) qui communique avec le récipient de floculation (1), une sortie d'eau filtrée (63) pour décharger l'eau filtrée, et une sortie d'évacuation d'eaux usées (624) pour décharger les eaux usées de lavage, et la sortie d'eau filtrée (63) communique avec le connecteur rotatif (631) du mécanisme de filtre.

13. Machine à laver selon la revendication 10, dans laquelle le mécanisme d'auto-nettoyage comprend une tête de pulvérisation (64), la tête de pulvérisation (64) est installée sur le récipient de filtre (61), et une direction d'eau pulvérisée agit sur une surface du mécanisme de filtre pour entraîner la rotation du mécanisme de filtre.
